# EUROPÄISCHE PATENTSCHRIFT

(11) **EP 1 574 926 B1**
(45) Veröffentlichungstag und Bekanntmachung des Hinweises auf die Patenterteilung: **30.04.2008**
(21) Anmeldenummer: 04007254.8
(22) Anmeldetag: 25.03.2004
(51) Int. Cl.: G05D 23/19, F03G 7/06

(54) **Elektrothermischer Stellantrieb mit verbessertem Heizmodul**
Electrothermal actuator with improved heating module
Actionneur électrothermique avec module chauffant amélioré

(30) Priorität: 11.03.2004 DE 10411984
(43) Veröffentlichungstag der Anmeldung: 14.09.2005
(73) Patentinhaber: DBK David + Baader GmbH, 76870 Kandel (DE)
(72) Erfinder: Vetter, Leonhard, 76829 Landau-Wollmesheim (DE); Buchlaub, Norbert, 76767 Hagenbach (DE)
(74) Vertreter: Grünecker, Kinkeldey, Stockmair & Schwanhäusser Anwaltssozietät

(56) Entgegenhaltungen:
- EP-A- 0 280 891

## Beschreibung

Die vorliegende Erfindung bezieht sich auf einen elektrothermischen Stellantrieb, insbesondere auf einen derartigen Stellantrieb mit einem Dehnstoffelement und einem Heizelement zum Beheizen des Dehnstoffelements. Weiterhin bezieht sich die Erfindung auf ein Heizmodul zum Beheizen des Dehnstoffelements sowie auf ein Verfahren zum Herstellen eines derartigen Heizmoduls und ein Verfahren zum Herstellen eines elektrothermischen Stellantriebs.

Bei einem elektrothermischen Stellantrieb führt ein Steuersignal, das beispielsweise von einem Temperatursensor geliefert wird, über ein Heizelement zum Erwärmen eines Dehnstoffelements. Dieses Dehnstoffelement wandelt durch seine thermische Ausdehnung die zugeführte Wärmeenergie und damit das elektrische Eingangssignal in eine Translationsbewegung beispielsweise eines Stößels um. Mit Hilfe dieser Translationsbewegung kann z. B. ein Ventil geschaltet werden. Wird der Heizstrom abgeschaltet, kehrt das Dehnstoffelement und damit der Stellantrieb in die Ausgangsposition zurück.

Derartige elektrothermische Stellantriebe können grundsätzlich überall dort verwendet werden, wo durch ein Ventil eine Verstellbewegung durchgeführt werden soll. Es können dadurch beispielsweise Klappen bewegt oder lichte Rohrquerschnitte verändert werden, wodurch auch die Durchflussmenge eines durch ein entsprechendes Rohrsystem strömenden oder fließenden Mediums verändert werden kann. Ein solches Medium ist beispielsweise Wasser oder Luft. Typische Anwendungsbereiche sind einerseits die Heizungs- und Lüftungstechnik, wie dies beispielsweise in der deutschen Offenlegungsschrift DE 102 20 682 A1, in der Gebrauchsmusterschrift DE 87 00 216 U1 oder in der europäischen Patentanmeldung 0 513 953 A1 gezeigt ist. Ein weiteres wesentliches Anwendungsfeld für den gattungsgemäßen elektrothermischen Stellantrieb stellt die Temperaturregelung des Kühlmittels von Brennkraftmaschinen dar. Entsprechende Thermostatventile mit einem elektrothermischen Stellantrieb sind aus den europäischen Patentschriften EP 0 544 985 B1 und EP 0 746 807 B1, der europäischen Offenlegungsschrift EP 0 486 757 A1, der deutschen Offenlegungsschrift DE 101 10 185 A1, der deutschen Offenlegungsschrift DE 41 39 328 A1 sowie aus der US-amerikanischen Patentschrift 5,961,039 bekannt.

Bei den bekannten Lösungen werden häufig Widerstände mit positivem Temperaturkoeffizienten, sogenannte PTC-Elemente, als Heizelement eingesetzt. Dabei werden diese PTC-Elemente direkt auf das Dehnstoffelement geklebt, oder wie in der DE 102 20 682 A1 gezeigt, durch eine flache, gut wärmeleitende Zwischenlage aus Isoliermaterial von dem Dehnstoffelement elektrisch isoliert. Meist ist jedoch kein besonderer Schutz gegenüber dem Eindringen von Feuchtigkeit vorgesehen und die Montage des Heizmoduls an dem Dehnstoffelement ist vergleichsweise kostenintensiv und kann nicht ohne weiteres automatisiert werden.

Damit ergibt sich bei vielen elektrothermischen Stellantrieben nach dem Stand der Technik das Problem, dass Ausfälle durch eindringende Feuchte oder aber durch transiente Überspannungen auftreten. In Anwendungsbereichen wie Fußbodenheizungen oder Heizkörpern muss jedoch häufig ein Feuchteschutz mit einer Schutzklasse von IP 54 oder IP 67, beziehungsweise eine Spannungsfestigkeit der Schutzklasse 2 eingehalten werden. Darüber hinaus sollte die Impulsfestigkeit mindestens 1,8 kV bis häufig sogar 3 kV betragen.

Daher besteht die Aufgabe der vorliegenden Erfindung darin, einen elektrothermischen Stellantrieb anzugeben, bei dem ein verbesserter Schutz gegenüber Feuchte, eine verbesserte Wärmeübertragung und eine verbesserte Impulsfestigkeit erreicht werden können und gleichzeitig die Montage vereinfacht und verbilligt werden kann sowie die geometrische Bauform reduziert werden kann.

Diese Aufgabe wird durch einen elektrothermischen Stellantrieb mit den Eigenschaften des Patentanspruchs 1, durch ein Heizmodul mit den Merkmalen des Patentanspruchs 8 sowie durch ein Herstellungsverfahren mit den Merkmalen des Patentanspruchs 9 gelöst.

Dabei basiert die vorliegende Erfindung auf der Grundidee, dass dadurch, dass die Isolierschicht ein Gehäuse bildet, welches das Heizelement zumindest teilweise umschließt, das Heizelement gegenüber Eindringen von Feuchtigkeit einerseits und gegenüber transienten Überspannungen andererseits optimal geschützt werden kann. Gleichzeitig stellt die erfindungsgemäße Lösung auch eine besonders einfache und kostengünstige Montage sicher und ermöglicht eine möglichst raumsparende Bauform, was beispielsweise in Fußbodenheizungen oder Bodenkanalheizungen, aber auch in Verbrennungsmotoren von essentieller Bedeutung ist. Weiterhin kann durch die erfindungsgemäße Einbettung des Heizelements in die Isolierschicht auch ein verbesserter Wärmefluss erreicht werden.

Dadurch, dass das Dehnstoffelement zumindest teilweise in dem Gehäuse aufgenommen ist, kann eine optimale Wärmeverteilung und Wärmeübertragung auf das Dehnstoffelement erreicht werden und damit die Ansprechgeschwindigkeit optimiert werden.

Insbesondere wenn das Heizelement vollständig von der Isolierschicht umgeben ist, kann ein Eindringen von unerwünschter Feuchte vollständig vermieden werden.

Die vorteilhaften Eigenschaften der erfindungsgemäßen Einbettung in die Isolierschicht können besonders dann genutzt werden, wenn das Heizelement durch mindestens einen Widerstand mit positivem Temperaturkoeffizienten gebildet ist. Derartige sogenannte PTC-Widerstände bieten den Vorteil, dass bei niedrigen Heiztemperaturen eine hohe Anfangsleistung eingespeist werden kann und mit zunehmender Temperatur ein selbstregelndes Leistungsverhalten auftritt. Ein PTC-Widerstand umfasst beispielsweise eine PTC-Keramik, die aus dotierter polykristalliner Keramik auf der Basis von Bariumtitanat - im Winterverfahren gefertigt wird. Im Bereich einer für den jeweiligen Baustein vordimensionierten Bezugstemperatur, der sogenannten Regeltemperatur, wechselt der Widerstandswert des PTC-Widerstands von einem nieder- zu einem hochohmigen Verhalten und steigt dabei sprunghaft um mehrere Zehnerpotenzen an.

Gemäß einer vorteilhaften Weiterbildung der vorliegenden Erfindung besteht die Isolierschicht aus einem wärmeleitenden Material, das gleichzeitig den elektrischen Isolieranforderungen genügt. Dies kann beispielsweise ein mit Magnesiumoxid oder Aluminiumoxid gefüllter Silikonkautschuk sein.

Eine besonders kostengünstige Herstellmöglichkeit für die das Heizelement umgebende Isolierschicht ist eine Spritzgusstechnik, bei der das Heizelement zumindest teilweise umspritzt wird. Die Spritzgusstechnik bietet den Vorteil, dass auf Kundenanforderungen bezüglich der Formgestaltung des Heizmoduls sehr weitgehend eingegangen werden kann.

Dabei kann auch sichergestellt werden, dass das Heizelement in thermischem Kontakt mit dem Dehnstoffelement bleibt, wenn dieses sich verformt. Im Falle eines Silikonkautschuks erfolgt die Verbindung zwischen dem Heizmodul und dem Dehnstoffelement auch über die Elastizität des Materials.

Anhand der in den beiliegenden Zeichnungen dargestellten Ausgestaltungen wird die Erfindung im Folgenden näher erläutert. Ähnliche oder korrespondierende Einzelheiten sind in den Figuren mit denselben Bezugszeichen versehen. Es zeigen:
- Figur 1: einen Schnitt durch ein Heizmodul und ein Dehnstoffelement gemäß der vorliegenden Erfindung;
- Figur 2: eine Draufsicht auf die Anordnung aus Figur 1;
- Figur 3: eine perspektivische Darstellung eines erfindungsgemäßen elektrothermischen Stellantriebs;
- Figur 4: den elektrothermischen Stellantrieb der Figur 3 in einem Heizkörperventil als Anwendungsumgebung.

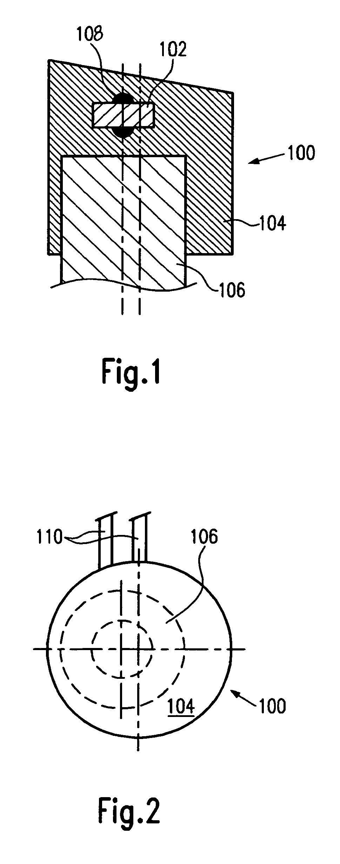

Figur 1 zeigt ein erfindungsgemäßes Heizmodul 100 mit einem Heizelement in Form eines Widerstands mit positivem Temperaturkoeffizienten, einem sogenannten PTC-Widerstand 102. Gemäß der vorliegenden Erfindung ist das PTC-Element 102 von einer isolierenden Vergussmasse 104 umgeben, die einerseits elektrisch isolierend ist, andererseits aber mit thermisch leitendem Füllmaterial, beispielsweise Aluminiumoxid oder Magnesiumoxid, versehen ist. In der hier gezeigten Ausführungsform besteht das Grundmaterial der Vergussmasse 104 aus Silikonkautschuk. Es können natürlich auch andere Materialien, die den Anforderungen entsprechen, eingesetzt werden.

Elektrische Kontaktierungen 108 sind an dem PTC 102 befestigt und werden nach außen geführt, wie dies mit Bezug auf Figur 2 noch deutlich wird. Das Heizmodul 100 ist so ausgeführt, dass es auf das zu beheizende Dehnstoffelement 106 (hier nur teilweise dargestellt) aufgeschoben werden kann. Durch die Passgenauigkeit und die Reibung zwischen den beiden Komponenten Heizmodul 100 und Dehnstoffelement 106 wird einerseits eine sichere mechanische Fixierung des Heizmoduls 100, zum anderen ein sehr guter Wärmeübergang zwischen dem Heizmodul und dem zu beheizenden Dehnstoffelement 106 sichergestellt.

In der gezeigten Ausführungsform ist an der Oberseite der isolierenden Gussmasse 104 eine Schrägung vorgesehen, um in dem Heizkörper, in den der elektrothermische Stellantrieb letztendlich eingebaut werden soll, Raum zu sparen. Jedoch kann das im Spritzgussverfahren herstellbare isolierende Gehäuse 104 entsprechend den gewünschten Anforderungen eine Vielzahl verschiedener Formen annehmen. Beispielsweise können verrundete Kalotten ausgebildet werden oder es kann ein Verdrehschutz angeformt werden, der ein Verdrehen des Heizmoduls 100 unterbindet und somit verhindert, dass die Litzen durch unbeabsichtigtes Verdrehen beschädigt werden. Ein Knickschutz für die Litzen kann schließlich ebenfalls ausgebildet werden.

Wie aus der Draufsicht der Figur 2 erkennbar, werden an einer Seite die beiden elektrischen Anschlüsse 110 nach außen geführt. Es kann sich hierbei um Litzen, Stifte, Kabel oder dergleichen handeln.

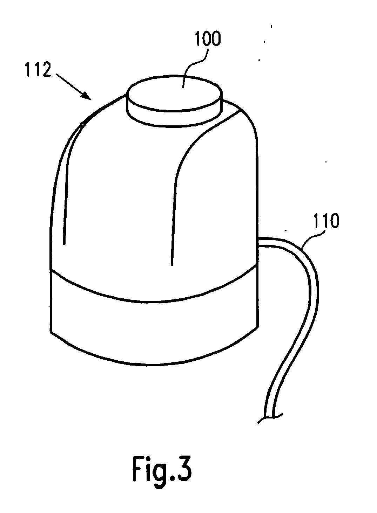

In Figur 3 ist in einer perspektivischen Darstellung ein erfindungemäßer elektrothermischer Stellantrieb 112 gezeigt. Dabei sind die Anschlüsse 110 in Form eines Kabels nach außen geführt. Die bewegliche Oberseite des montierten Heizmoduls 100 ist ebenfalls erkennbar.

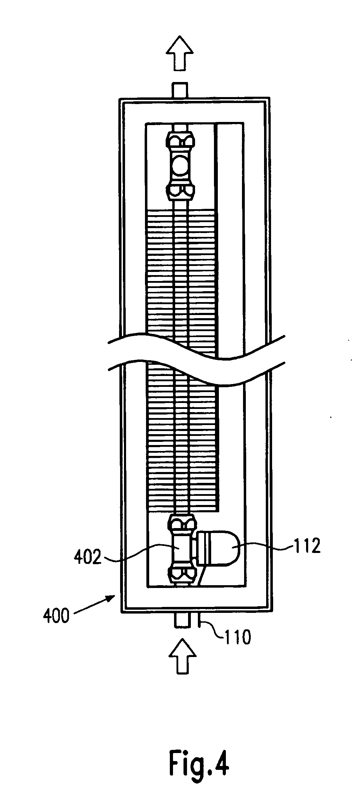

Figur 4 zeigt schematisch den erfindungsgemäßen Stellantrieb 112 in Verbindung mit einem Ventil 402, wie es beispielsweise in einem Heizkörper 400 für Fußbodenheizungen verwendet wird. Zur Steuerung des Stellantriebs 112 können Raumtemperaturregler mit ausgangsseitigem Schaltkontakt verwendet werden. Diese Raumtemperaturregler müssen dann mit dem elektrischen Anschluss 110 des Stellantriebes 112 verbunden werden. Über den Raumtemperaturregler wird der elektrothermische Stellantrieb eingeschaltet und beginnt gemäß einer Zweipunktregelung das Thermostatventil entweder zu öffnen oder zu schließen. Wird der Heizstrom wieder abgeschaltet, schließt beziehungsweise öffnet der Stellmotor das Ventil wieder. Der Vorteil einer derartigen elektrothermischen Stellanordnung besteht neben der geringen Baugröße auch in einer Wartungsfreiheit und einer geräuschlosen Arbeitsweise, was insbesondere in Wohnräumen von besonderem Vorteil ist.

## Patentansprüche

1. Elektrothermischer Stellantrieb mit einem Dehnstoffelement (106) und einem Heizelement (102) zum Beheizen des Dehnstoffelements (106), wobei das Heizelement (102) von dem Dehnstoffelement (106) durch eine Isolierschicht (104) elektrisch isoliert ist und die Isolierschicht (104) durch ein Gehäuse gebildet ist, welches das Heizelement (102) zumindest teilweise umschließt
**dadurch gekennzeichnet,**
**dass** das Gehäuse (104) vollständig in Spritzgusstechnik aus einem elastischen, elektrisch isolierenden und thermisch leitfähigen Material hergestellt ist und so ausgebildet ist, dass es auf das Dehnstoffelement (106) aufschiebbar ist.

2. Elektrothermischer Stellantrieb nach Anspruch 1, **dadurch gekennzeichnet, dass** das Heizelement (102) vollständig von der Isolierschicht (104) umgeben ist.

3. Elektrothermischer Stellantrieb nach einem der Ansprüche 1 oder 2, **dadurch gekennzeichnet, dass** das Heizelement (102) durch mindestens einen Widerstand mit positivem Temperaturkoeffizienten gebildet ist.

4. Elektrothermischer Stellantrieb nach einem der Ansprüche 1 bis 3, **dadurch gekennzeichnet, dass** das Gehäuse (104) aus mit Magnesiumoxid gefülltem Silikonkautschuk besteht.

5. Elektrothermischer Stellantrieb nach einem der Ansprüche 1 bis 4, **dadurch gekennzeichnet, dass** das Gehäuse (104) mit dem Dehnstoffelement (106) formschlüssig und/oder reibschlüssig verbunden ist.

6. Heizmodul für einen elektrothermischen Stellantrieb, das ein Heizelement (102) zum Beheizen eines Dehnstoffelements (106) und eine Isolierschicht (104) zum elektrischen Isolieren des Heizelements (102) von dem Dehnstoffelement (106) aufweist,
**dadurch gekennzeichnet,**
**dass** die Isolierschicht (104) ein Gehäuse bildet, welches das Heizelement (102) zumindest teilweise umschließt, und
**dass** das Gehäuse (104) vollständig in Spritzgusstechnik aus einem elastischen, elektrisch isolierenden und thermisch leitfähigen Material hergestellt ist und so ausgebildet ist, dass es auf das Dehnstoffelement (106) aufschiebbar ist.

7. Verfahren zum Herstellen eines Heizmoduls für einen elektrothermischen Stellantrieb, das ein Heizelement zum Beheizen eines Dehnstoffelements und eine Isolierschicht zum elektrischen Isolieren des Heizelements von dem Dehnstoffelement aufweist, **dadurch gekennzeichnet, dass** das Verfahren den folgenden Schritt umfasst:
Einkapseln des Heizelements, so dass die Isolierschicht ein Gehäuse bildet, welches das Heizelement zumindest teilweise umschließt, wobei das Gehäuse vollständig in Spritzgusstechnik aus einem elastischen, elektrisch isolierenden und thermisch leitfähigen Material hergestellt wird und so ausgebildet ist, dass es auf das Dehnstoffelement aufschiebbar ist.

8. Verfahren nach Anspruch 7, **dadurch gekennzeichnet, dass** das Heizelement durch mindestens einen Widerstand mit positivem Temperaturkoeffizienten gebildet ist.

9. Verfahren nach Anspruch 7 oder 8, **dadurch gekennzeichnet, dass** das Gehäuse aus mit Magnesiumoxid gefülltem Silikonkautschuk hergestellt wird.

10. Verfahren nach Anspruch 9, **dadurch gekennzeichnet, dass** beim Herstellen des Gehäuses das Heizelement vollständig umspritzt wird.

11. Verfahren zum Herstellen eines elektrothermischen Stellantriebs mit einem Dehnstoffelement und einem Heizmodul zum Beheizen des Dehnstoffelements, wobei das Verfahren die folgenden Schritte umfasst:
Herstellen des Heizmoduls mit einem Verfahren nach mindestens einem der Patentansprüche 7 bis 10,
Verbinden des Dehnstoffelements mit dem Gehäuse, so dass ein Wärmeübergang zwischen dem Heizelement und dem Dehnstoffelement erfolgen kann, wobei das Dehnstoffelement so formschlüssig und/oder reibschlüssig mit dem Gehäuse verbunden wird, dass das Dehnstoffelement zumindest teilweise von dem Gehäuse umschlossen ist.

12. Thermostatventilanordnung, vorzugsweise für den Heizkörper (400) einer Warmwasserheizung, umfassend
ein Ventil (402) und
ein Steuerteil zum Ansteuern des Ventils mit einem elektrothermischen Stellantrieb (112) nach mindestens einem der Patentansprüche 1 bis 5.

## Claims

1. Electrothermal actuator with an expanding material element (106) and a heating element (102) for heating the expanding material element (106), wherein the heating element (102) is electrically insulated from the expanding material element (106) by an insulating layer (104) and the insulating layer (104) is formed by a housing which at least partially encloses the heating element (102), **characterised in that** the housing (104) is manufactured completely in the injection-moulding technology from a resilient, electrically insulating and thermally conductive material and is so formed that it may be mounted on the expanding material element (106).

2. Electrothermal actuator according to claim 1, **characterised in that** the heating element (102) is surrounded completely by the insulating layer (104).

3. Electrothermal actuator according to either of claims 1 or 2, **characterised in that** the heating element (102) is formed by at least one resistor with a positive temperature coefficient.

4. Electrothermal actuator according to one of claims 1 to 3, **characterised in that** the housing (104) consists of silicone rubber filled with magnesium oxide.

5. Electrothermal actuator according to one of claims 1 to 4, **characterised in that** the housing (104) is connected to the expanding material element (106) with positive locking and/or with friction locking.

6. Heating module for an electrothermal actuator, which has a heating element (102) for heating an expanding material element (106) and an insulating layer (104) for electrically insulating the heating element (102) from the expanding material element (106), **characterised in that** the insulating layer (104) forms a housing which at least partially encloses the heating element (102), and **in that** the housing (104) is manufactured completely in the injection-moulding technology from a resilient, electrically insulating and thermally conductive material and is so formed that it may be mounted on the expanding material element (106).

7. Method of manufacturing a heating module for an electrothermal actuator, which has a heating element for heating an expanding material element and an insulating layer for electrically insulating the heating element from the expanding material element, **characterised in that** the method comprises the following step:
encasing the heating element, so that the insulating layer forms a housing which at least partially encloses the heating element, the housing being manufactured completely in the injection-moulding technology from a resilient, electrically insulating and thermally conductive material and being so formed that it may be mounted on the expanding material element.

8. Method according to claim 7, **characterised in that** the heating element is formed by at least one resistor with a positive temperature coefficient.

9. Method according to claim 7 or 8, **characterised in that** the housing is manufactured from silicone rubber filled with magnesium oxide.

10. Method according to claim 9, **characterised in that** during manufacture of the housing, the heating element is completely encased with injection-moulded material.

11. Method for manufacturing an electrothermal actuator having an expanding material element and a heating module for heating the expanding material element, the method comprising the following steps:
manufacturing the heating module by a method according to at least one of claims 7 to 10,
connecting the expanding material element to the housing so that a heat transfer can take place between the heating element and the expanding material element, the expanding material element being connected to the housing by positive locking and/or friction locking in a way that the expanding material element is at least partially enclosed by the housing.

12. Thermostat valve arrangement, preferably for the radiator (400) of a hot-water heating system, comprising a valve (402) and a control part for triggering the valve with an electrothermal actuator (112) according to at least one of claims 1 to 5.

## Revendications

1. Actionneur électrothermique comprenant un élément de dilatation (106) et un élément chauffant (102) pour chauffer l'élément de dilatation (106), l'élément chauffant (102) étant isolé électriquement de l'élément de dilatation (106) par une couche isolante (104) et la couche isolante (104) est formée par un logement qui entoure au moins partiellement l'élément chauffant (102),
**caractérisé en ce que** le logement (104) est fabriqué entièrement par une technique de moulage par injection dans un matériau élastique, isolant électriquement et thermoconducteur et ainsi formé qu'il peut être poussé sur l'élément de dilatation (106).

2. Actionneur électrothermique selon la revendication 1,
**caractérisé en ce que** l'élément chauffant (102) est entouré entièrement par la couche isolante (104).

3. Actionneur électrothermique selon l'une des revendications 1 ou 2,
**caractérisé en ce que** l'élément chauffant (102) est formé par au moins une résistance au coefficient de température positif.

4. Actionneur électrothermique selon l'une des revendications 1 à 3,
**caractérisé en ce que** le logement (104) est composé de caoutchouc de silicone rempli d'oxyde de magnésium.

5. Actionneur électrothermique selon l'une des revendications 1 à 4,
**caractérisé en ce que** le logement (104) est relié à l'élément de dilatation (106) par imbrication et/ou par friction.

6. Module chauffant pour un actionneur électrothermique qui présente un élément chauffant (102) pour chauffer un élément de dilatation (106) et une couche isolante (104) pour l'isolation électrique de l'élément chauffant (102) par l'élément de dilatation (106),
**caractérisé en ce que**
la couche isolante (104) forme un logement qui entoure au moins partiellement l'élément chauffant (102) et que le logement (104) est fabriqué entièrement par une technique de moulage par injection dans un matériau élastique, isolant électriquement et thermoconducteur et est ainsi formé qu'il peut être poussé sur l'élément de dilatation (106).

7. Procédé de fabrication d'un module chauffant pour un actionneur électrothermique qui présente un élément chauffant pour chauffer un élément de dilatation et une couche isolante pour l'isolation électrique de l'élément chauffant par l'élément de dilatation,
**caractérisé en ce que** le procédé comprend l'étape suivante :
encapsulage de l'élément chauffant de façon que la couche isolante forme un logement qui entoure l'élément chauffant au moins partiellement, le logement étant fabriqué entièrement par une technique de moulage par injection dans un matériau élastique, isolant électriquement et thermoconducteur et ainsi formé qu'il peut être poussé sur l'élément de dilatation.

8. Procédé selon la revendication 7,
**caractérisé en ce que** l'élément chauffant est formé par au moins une résistance au coefficient de température positif.

9. Procédé selon la revendication 7 ou 8,
**caractérisé en ce que** le logement est composé de caoutchouc de silicone rempli d'oxyde de magnésium.

10. Procédé selon la revendication 9,
**caractérisé en ce que** lors de la fabrication du logement, l'élément chauffant est entièrement enrobé par injection.

11. Procédé de fabrication d'un actionneur électrothermique avec un élément de dilatation et un élément chauffant pour chauffer l'élément de dilatation, le procédé comprenant les étapes suivantes :
fabrication du module chauffant avec un procédé selon au moins l'une des revendications 7 à 10,
liaison de l'élément de dilatation à un logement, de façon qu'un transfert de chaleur entre l'élément chauffant et l'élément de dilatation puisse se produire, l'élément de dilatation étant ainsi relié au logement par imbrication et/ou par friction, de façon que l'élément de dilatation soit entouré au moins partiellement par le logement.

12. Dispositif de vanne thermostatique, de préférence pour un corps chauffant (400) d'un chauffage à eau chaude, comprenant
une vanne (402) et
une partie de commande pour commander la vanne avec un actionneur électrothermique (122) selon au moins l'une des revendications 1 à 5.
